# EUROPEAN PATENT APPLICATION

(11) **EP 4 332 921 A1**
(43) Date of publication of application: **06.03.2024**
(21) Application number: 22193155.3
(22) Date of filing: 31.08.2022
(51) Int. Cl.: G07C 9/00

(54) **METHOD FOR MANAGING ACCESS TO AN ASSET BASED ON WORKORDER-DEPENDENT ACCESS RIGHTS**

(71) Applicant: dormakaba Schweiz AG, 8623 Wetzikon (CH)
(72) Inventor: Groth, Uwe, Wetzikon (CH); Greil, Stefan, Wetzikon (CH)
(74) Representative: Balder IP Law, S.L.

(57) **Abstract**

A computer-implemented method for managing access to an asset based on workorder-dependent access rights, the method being performed by an access management server, comprising: defining an association between a workorder and an access right, wherein the workorder is to be performed at an asset, and wherein the access right grants access to the asset; allocating the workorder and the associated access right to a first operator person being assigned to perform the workorder; sending the associated access right to a first operator device of the first operator person; receiving a re-allocation request from first operator device requesting to re-allocate the workorder to a second operator person having a second operator device to be assigned to perform the workorder instead of the first operator person; performing re-allocation and sending the associated access right to a second operator device of the second operator person.

## Description

### FIELD OF THE INVENTION

The present invention relates to a access control methods, in particular for managing access to an asset based on workorder-dependent access rights. Further, the present invention relates to an access management server, an operator device and a system for performing such method. Further, the present invention relates to a computer program product for performing such method.

### BACKGROUND OF THE INVENTION

Locking systems are known, for example, as smart locks and describe an electromechanical lock that can be unlocked and locked by an interaction with an authorized device. In such an interaction, for example, encrypted data enabling identification of the authorized device can be transmitted from the authorized device to the electromechanical lock via a wireless transmission protocol. Smart lock systems are known from the prior art that, unlike ordinary electromechanical lock systems, can also monitor accesses and send notifications of an opening or closing operation to other devices.

Smart locks are used both in the area of access control for buildings and rooms (e.g., for craftsmen, domestic helpers, tenants of vacation homes) and in the area of utility services, i.e., utilities that perform maintenance and operation of infrastructure objects (e.g., power boxes, water supply points, gas pressure control systems, signal boxes on railroad tracks). Especially in the field of utility services, temporary access is often required for various operator persons, for example craftsmen. There is therefore a need to distribute access rights and work orders efficiently and with little effort.

### SUMMARY OF THE INVENTION

It is therefore an object of the present invention to provide a smart and efficient method for managing access to an asset based on workorder-dependent access rights. Further, it is an object of the present invention to provide an access management server, an operator device, a system and a computer program for performing such method.

The above-mentioned objects are addressed through the features of the independent claims. In addition, further advantageous embodiments follow from the dependent claims and the description.

According to a first aspect of the present invention, a computer-implemented method for managing access to an asset based on workorder-dependent access rights is provided. The method may be performed by an access management server. The method may comprise defining an association between a workorder and an access right, wherein the workorder is to be performed at an asset, and wherein the access right grants access to the asset. The method may comprise allocating the workorder and the associated access right to a first operator person being assigned to perform the workorder. The method may comprise sending the associated access right to a first operator device of the first operator person. The method may comprise receiving a re-allocation request from first operator device requesting to re-allocate the workorder to a second operator person to be assigned to perform the workorder instead of the first operator person. The method may comprise performing re-allocation and sending the associated access right to a second operator device of the second operator person.

The term workorder-dependent access right generally refers to an earmarked access rights which is provided for a specific purpose, the purpose being the fulfilment of a workorder. A workorder in the sense of the present invention may include in particular all types of possible maintenance works and checks on assets. Also, repair works, renewal works, and the like may of course be included in the term workorder.

A workorder may be one workorder in a set of workorders, wherein it is possible that a whole set of workorders is allocated to one operator person, or particular workorders of a set of workorders may be allocated to different operator persons.

An association between a workorder and an access right may be understood being the technical implementation of the fact that the access right is a workorder-dependent access right, i.e. an earmarked access right. Associations may be for example implemented via a database.

Each workorder may be supposed to be performed at an asset. The term "at an assed" may be understood generically to include, for example if the asset is a building, the performance of the workorder in the building, on the building, etc.

The access right may grant access to the asset. This means that using the access right, an authorization may be performed such that the holder of the access right may access a respective asset. For instance, access can be controlled on site at the asset by an access control reader. The access right can then be transmitted to this reader in order to obtain access.

The allocation of the workorder and the associated access right to a first operator person may be understood as an allocation of a workorder including the necessary access rights in order to fulfill the workorder. As described above, an association between a workorder and an access right is already existent such that for an allocation to an operator person it is technically sufficient to only allocate the workorder or the access right. Allocations to operator persons may also be for example implemented via a database.

The term access management server may be a remote server which is accessible by operator devices which are capable to communicate with the access management server. For example, the access management server may be a cloud service.

A respective operator device may preferably have a user interface such that an operator person may provide input into the operator device. In particular, the operator device be mobile devices. The respective mobile devices may have an installed app through which for example a communication with the access management server may be provided.

A re-allocation request may at least include an information that the first operator person is, for whatever reason, not capable to fulfill the workorder. Preferably, the first operator person additionally provides an information to which second operator person the workorder should be re-allocated.

According to a second aspect of the present invention, a computer-implemented method for managing access to an asset based on workorder-dependent access rights may be provided. The method may be performed by a first operator device of a first operator person. The method may comprise receiving, from an access management server, an access right which is associated with a workorder, wherein the workorder and the associated access right are allocated to the first operator person, wherein the workorder is to be performed at an asset, and wherein the access right grants access to the asset. The method may comprise sending a re-allocation request to the access management server requesting to re-allocate the workorder to a second operator person to be assigned to perform the workorder instead of the first operator person, the second operator person (120) having a second operator device (121). The method may comprise receiving a positive notification if the re-allocation was successfully performed by the access management server and/or a negative notification if the re-allocation was not successfully performed by the access management server.

All technical implementation details and advantages described with respect to the first aspect of the present invention are self-evidently mutatis mutandis applicable for the second aspect of the present invention.

According to a third aspect of the present invention, a computer-implemented method for managing access to an asset based on workorder-dependent access rights may be provided. The method may be performed by a system including an access management server, a first operator device and a second operator device. The method may comprise determining, by an access management server, an association between a workorder and an access right, wherein the workorder is to be performed at an asset, and wherein the access right grants access to the asset. The method may comprise allocating, by the access management server, the workorder and the associated access right to a first operator person being assigned to perform the workorder. The method may comprise sending, by the access management server, the associated access right to a first operator device of the first operator person, and receiving the associated access right by the first operator device. The method may comprise receiving, by the first operator device, user input from the first operator person through a user interface of the first operator device, wherein the user input includes a re-allocation request with respect to the workorder which is allocated to the first operator person. The method may comprise sending, by the first operator device, the re-allocation request to the access management server, and receiving the re-allocation request by the access management server. The method may comprise performing re-allocation and sending, by the access management server, the workorder and the associated access right to a second operator device of the second operator person to be assigned to perform the workorder instead of the first operator person.

All technical implementation details and advantages described with respect to the first and second aspects of the present invention are self-evidently mutatis mutandis applicable for the third aspect of the present invention.

Further technical implementations with respect to the first, second and third aspects of the present invention are described in the following.

It may be provided that in the course of requesting re-allocation, the access management server provides a list of available operator persons to the first operator device, and the first operator person selects, using the first operator device, the second operator person to which the workorder should be re-allocated.

The provision of a list of available operator persons may in particular take into account the capacities of other operator persons. Furthermore, the list may take into account which operator persons are eligible for the re-allocation in terms of qualification and/or trust level and/or are allowed to perform the respective workorder.

In other words: Besides the availability of time capacities of other operator persons, other factors can be taken into account. For example, for a workorder concerning the maintenance of an electrical control cabinet, an industrial machinist cannot be selected, but only those operator persons who have the corresponding knowledge for the workorder, in particular electricians. Another example is the maintenance of an airport's security system, which may require that only certain trusted operator persons are allowed to perform certain workorders, since the respective infrastructures are security-relevant. The operator persons can accordingly be assigned a trust level, whereby certain trust levels may be required for certain workorders. The provision of the list of available workorders may take into account these factors.

It may be provided that re-allocation is only performed, if the access management server obtains consent from the second operator person by communicating with the second operator device.

If no consent is given by the second operator person, the re-allocation may be aborted, or the allocation may be reset so that the workorder is again assigned to the first operator person to perform the workorder.

This ensures that a workorder is always assigned to a responsible operator person who has to fulfill the workorder. Thus, no workorders are neglected.

It may be provided that operator persons are classified in classes, wherein workorders and/or access rights may require that an assigned operator person is of a specific class, wherein re-allocation from the first to the second operator person is only performed, if the second operator person fulfills the requirement of class.

As described above, a workorder may include restrictions on the operator persons who may execute the workorder. Such restrictions may in particular include the qualification of the operator persons and/or the trust level of the operator persons and/or a combination of both factors. Depending on the qualification and/or trust level of an operator person, this person can be classified. Each operator person can then be assigned to a corresponding class.

There may also be subclasses. For example, the qualification can influence the class, while the trust level influences the subclass to which an operator person is assigned. For example, there can be 3 classes of qualifications (e.g. "electrician", "mechanic", "programmer") and 2 subclasses of trust levels ("high", "regular").

For example, an operator person with the qualification "electrician" may be classified in class 1. An operator person with the qualification "mechanic" can be classified in class 2. If the "electrician" has a high trust level, he or she can be assigned to subclass A. A work order on an electrical control cabinet at an airport, for example, may then have the requirement that the operator person must be from class 1, subclass A. The "electrician" mentioned would fulfill this requirement and could take over the workorder in the framework of a re-allocation. The "machinist" mentioned, however, would not.

It may be provided that in the course of a re-allocation, the workorder is allocated to the second operator person being assigned to perform the workorder, and the allocation of the workorder to the first operator person is deleted, wherein the information about the re-allocation is stored in the access management server, preferably including a time stamp.

In may be provided that in the course of a re-allocation, the access right of the first operator device is revoked, preferably by transmitting a revocation command from the access management server to the first operator device, wherein optionally re-allocation is only performed under the condition that the access right of the first operator device is successfully revoked.

As a rule, it would not be a problem if an access right were to remain with the first operator person despite a reallocation to a second operator person.

In the case of particularly security-relevant assets, however, a strict requirement may be made to grant access only to as few persons as possible. In such cases, an additional security measure may be to revoke the access right of the first operator person before the re-allocation takes place and the access right is transferred to the second operator person. Such a revocation of an access right can be done in particular by a revocation command from the access management server to the first operator device.

As an additional security level, the access management server can be configured to wait for confirmation that the access right has been revoked before performing the re-allocation and transferring the access right to the second operator device. In particular, a requirement can be implemented that the first operator device must be connected to the server, for example online, until the re-allocation process is completed.

It may be provided that the workorder is categorized being re-allocatable by operator persons or being non-re-allocatable by operator persons, wherein only workorders with associated access rights may successfully be re-allocated by operator persons if the workorder is of the re-allocatable category.

Depending on the workorder there might be a restriction that a respective workorder cannot be re-allocated by any operator person. Re-allocation is then only possible by a central re-allocation entity, for example the owner of a respective asset to which the respective workorder belongs. If a workorder is labeled to be not re-allocatable by any operator person, the re-allocation of the respective workorder as well as the associated access right is blocked.

It may be provided that the access right is categorized being re-allocatable by operator persons or being non-re-allocatable by operator persons, wherein only workorders with associated access rights may successfully be re-allocated by operator persons if the access right is of the re-allocatable category.

Depending on the access right, in particular depending on the asset to which the access right may provide access, there might be a restriction that a respective access right cannot be re-allocated by any operator person. Re-allocation is then only possible by a central re-allocation entity, for example the owner of a respective asset to which the respective access right provides access. If an access right is labeled to be not re-allocatable by any operator person, the re-allocation of the respective workorder as well as the associated access right is blocked.

It may be provided that the communication between the operator devices and the access management server is performed using an online communication protocol.

It may be provided that for gaining access to a respective asset, the access right is transferred, preferably via a wireless communication technology, from a respective operator device to an electronic key, wherein the electronic key receives and stores the access right and is configured to communicate with an access control device that controls access to the asset.

According to a fourth aspect of the present invention, an access management server is provided, the access management server being configured to at least partially perform a method according to the first, second and/or third aspect of the present invention.

All technical implementation details and advantages described with respect to the first, second or third aspects of the present invention are self-evidently mutatis mutandis applicable for the fourth aspect of the present invention.

According to a fifth aspect of the present invention, an operator device, preferably being a mobile device, is provided, wherein the operator device is configured to communicate with an access management server according to the fourth aspect of the present invention to at least partially perform a method according to the first, second and/or third aspect of the present invention.

All technical implementation details and advantages described with respect to the first, second, third and fourth aspects of the present invention are self-evidently mutatis mutandis applicable for the fifth aspect of the present invention.

According to a sixth aspect of the present invention, a system comprising an access management server according to the fourth aspect of the present invention and at least a first operator device according to the fifth aspect of the present invention and at least a second operator device according to the fifth aspect of the present invention is provided, wherein the system is configured to at least partially perform a method according to the first, second and/or third aspect of the present invention.

All technical implementation details and advantages described with respect to the first, second, third, fourth and fifth aspects of the present invention are self-evidently mutatis mutandis applicable for the sixth aspect of the present invention.

The system may further comprise at least a first electronic key being configured to communicate with the at least one first operator device and at least one second electronic key being configured to communicate with the at least one second operator device, wherein the at least one first and second electronic keys are preferably configured to perform access control with an access control device which is capable to grant and/or deny access to an asset.

According to a seventh aspect of the present invention, a computer program product is provided, comprising instructions which, when the program is executed by a computer, cause the computer to at least partially carry out a method according to the first, second and/or third aspect of the present invention.

All technical implementation details and advantages described with respect to the first, second, third, fourth, fifth and sixth aspects of the present invention are self-evidently mutatis mutandis applicable for the seventh aspect of the present invention.

### BRIEF DESCRIPTION OFTHE DRAWINGS

The present invention will be explained in more detail, by way of example, with reference to the drawings in which:
- Figure 1: shows a highly schematic illustration of an initial state including entities before performing re-allocation according to embodiments of the present invention.
- Figure 2a: shows a highly schematic illustration of a first target state including entities after performing re-allocation according to embodiments of the present invention.
- Figure 2b: shows a highly schematic illustration of a second target state including entities after performing re-allocation according to embodiments of the present invention.
- Figure 3: shows a highly schematic illustration of an initial state including entities before performing re-allocation according to embodiments of the present invention, wherein electronic keys are additionally used.
- Figure 4a: shows a highly schematic illustration of a first target state including entities after performing re-allocation according to embodiments of the present invention, wherein electronic keys are additionally used.
- Figure 4b: shows a highly schematic illustration of a second target state including entities after performing re-allocation according to embodiments of the present invention, wherein electronic keys are additionally used.
- Figure 5:: illustrates several entities which may interact to perform a method according to embodiments of the present invention.

### DETAILED DESCRIPTION OF EMBODIMENTS

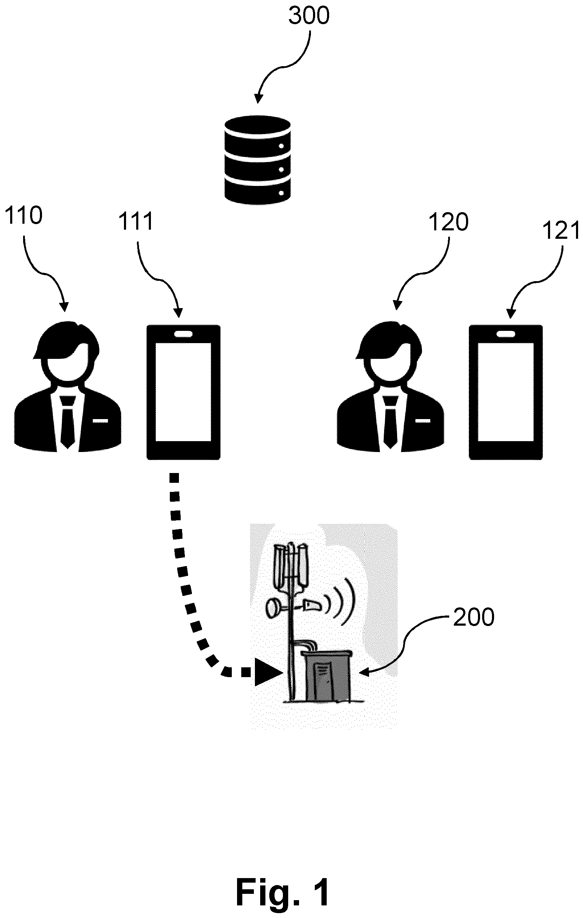

Figure 1 shows an access management server 300, a first operator person 110 and a second operator person 120. The first operator person 110 has a first operator device 111 and the second operator person 120 has a second operator device 121. The first and second operator person 110, 120 are able to communicate with the access management server 300 using the respective first and second operator device 111, 121. For the purpose of communicating with the access management server 300, the first and second operator device 111, 121 may have a dedicated operator app installed thereon, and may be able to communicate through an online connection. Further, figure 1 depicts an asset 200 where a workorder may be performed. The asset 200 may comprise an electronic lock controlling access to the asset 200.

Access rights for accessing the asset 200 may be workorder-dependent and may be provided to the first and/or second operator device 111, 121 in order to grant them access to the asset 200.

As figure 1 illustrates an initial situation before any re-allocation according to embodiments of the present invention, the access management server 300 may have performed the steps of defining an association between a workorder and an access right, wherein the workorder is to be performed at the asset 200, and wherein the access right grants access to the asset 200; allocating the workorder and the associated access right to the first operator person 110 being assigned to perform the workorder; sending the associated access right to the first operator device 111 of the first operator person 110.

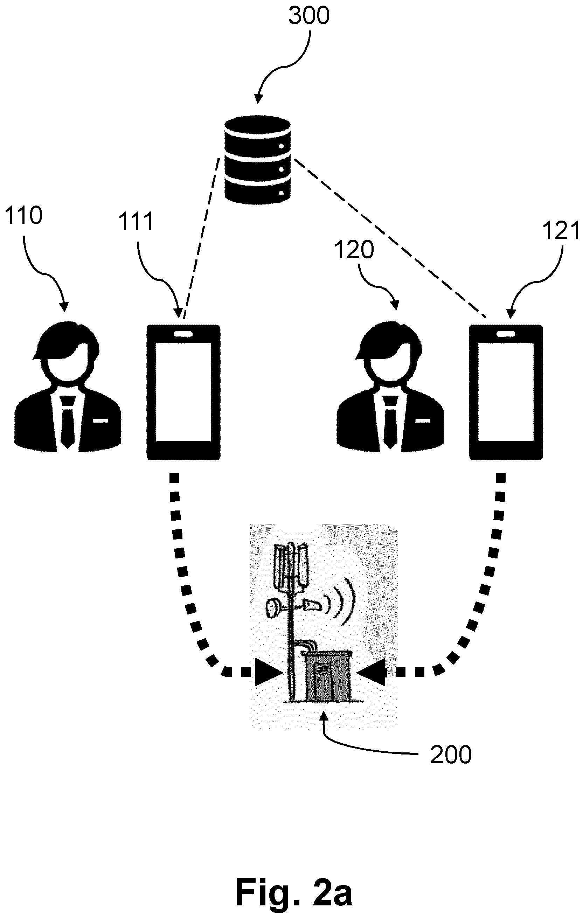

Figure 2a illustrates, different than figure 1, a target situation in which re-allocation has been performed according to embodiments according to the present invention. Thus, the access management server 300 may have additionally performed the steps of receiving a re-allocation request from first operator device 111 requesting to re-allocate the workorder to a second operator person 120 having a second operator device 121 to be assigned to perform the workorder instead of the first operator person 110; and performing re-allocation and sending the associated access right to a second operator device 121 of the second operator person 120. After successful re-allocation, as it is depicted through the thick dashed arrows from the first and second operator devices 111, 121 to the asset 200, both - the first and the second operator person 110, 120 - do have access to the asset 200. This may be performed

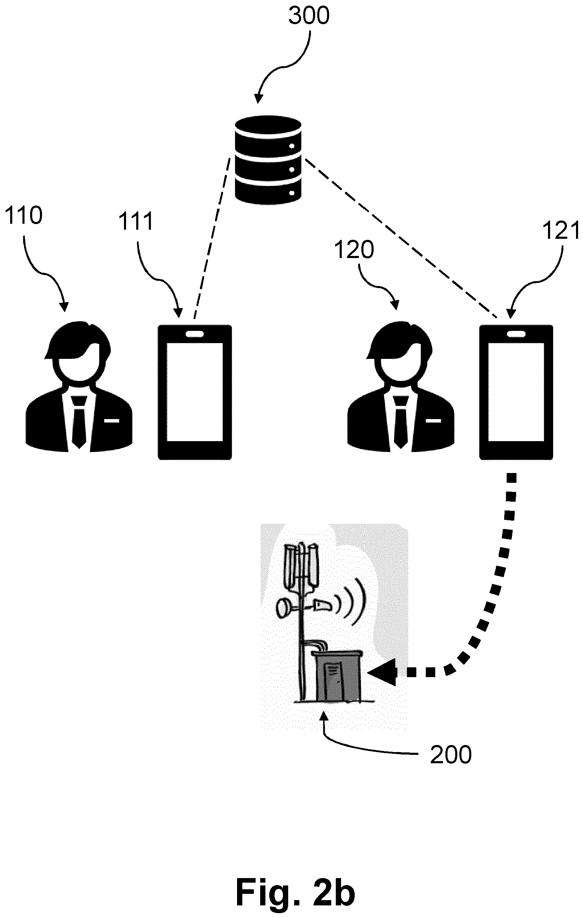

Other than in the situation of figure 2a, figure 2b illustrates a situation in which after re-allocation only the second operator person 110 has the right to access the asset 300. For that, it may be provided that in the course of a re-allocation, the access right of the first operator device 111 is revoked, preferably by transmitting a revocation command from the access management server 300 to the first operator device 111, wherein optionally re-allocation is only performed under the condition that the access right of the first operator device 111 is revoked. Generally, it would not be a problem if an access right were to remain with the first operator person 110 as it is the case in the situation of figure 2. But in the case of particularly security-relevant assets, however, a strict requirement may be made to grant access only to as few persons as possible. In such cases, an additional security measure may be to revoke the access right of the first operator person 110 before the re-allocation takes place and the access right is transferred to the second operator person 120.

As an additional security level, the access management server 300 can be configured to wait for confirmation that the access right has been revoked before performing the re-allocation and transferring the access right to the second operator device 121. In particular, a requirement can be implemented that the first operator device 111 must be connected to the server 300, for example online, until the re-allocation process is completed.

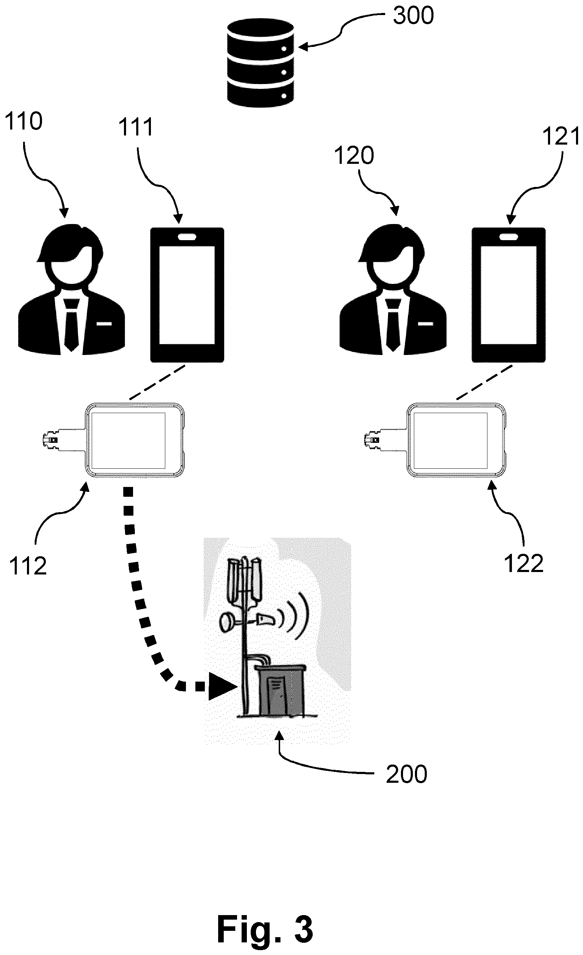

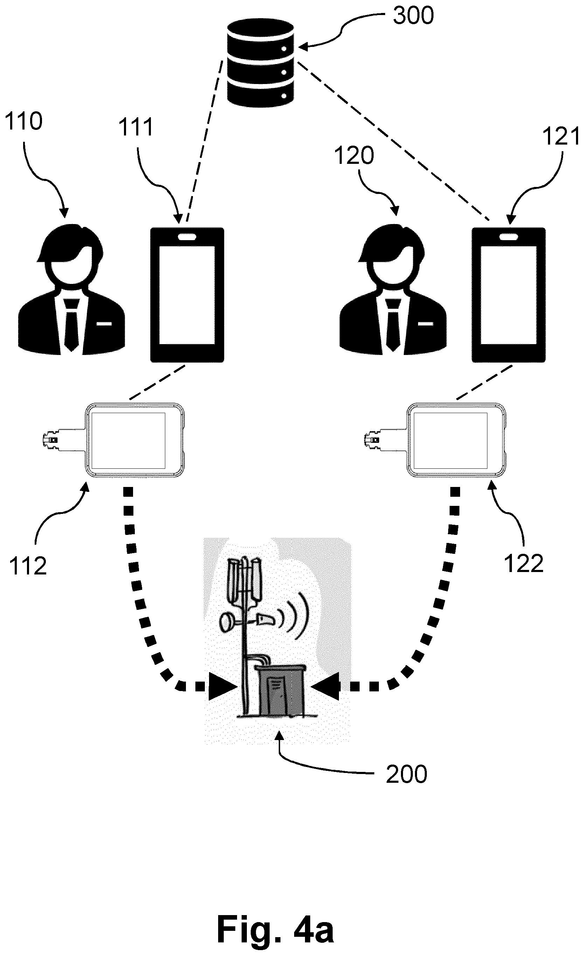

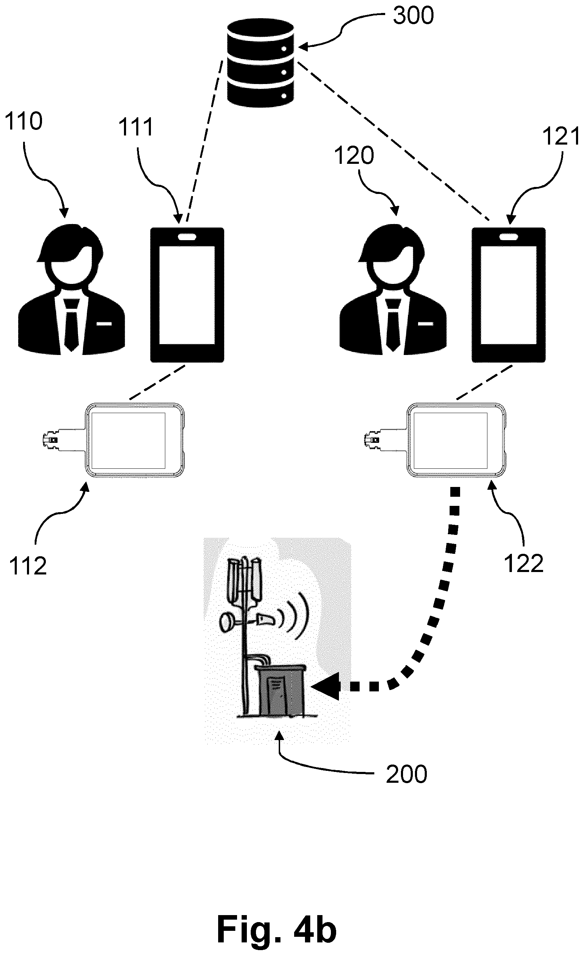

Figures 3, 4a and 4b are analogous to figures 1, 2a and 2b. The only difference here is that the first and second operator persons 110, 120 also have an associated first and second electronic key 112, 122 in addition to the respective first and second operator device 111, 121. The electronic keys 112, 122 may be provided to open an electronic lock on the asset 200, possibly to energize or further. By using the electronic keys 112, 122, it can be ensured that the operator persons 110, 120 do not gain access to the asset 200 due to an error on the respective operator device 111, 121. Furthermore, a higher security level can be ensured if the operator device 111, 121 is only used as a gateway to obtain access rights from the access management server 300 and to transfer them to the respective electronic key 112, 122. Access by means of the electronic keys 112, 122 can also be possible without an online connection.

In the situation shown in Figure 4b, which is analogous to Figure 2b, the access right of the electronic key 112 is to be revoked. This can be ensured for example by allowing a re-allocation only if the first operator device 111 communicates with the access management server 300 while having a connection to the electronic key 112. Revocation of the access right which is stored on the electronic key 112 may be then performed in the course of re-allocation.

It may be provided that in the course of a re-allocation, the workorder is allocated to the second operator person 120 being assigned to perform the workorder, and the allocation of the workorder to the first operator person 110 is deleted, wherein the information about the re-allocation is stored in the access management server 300, preferably including a time stamp.

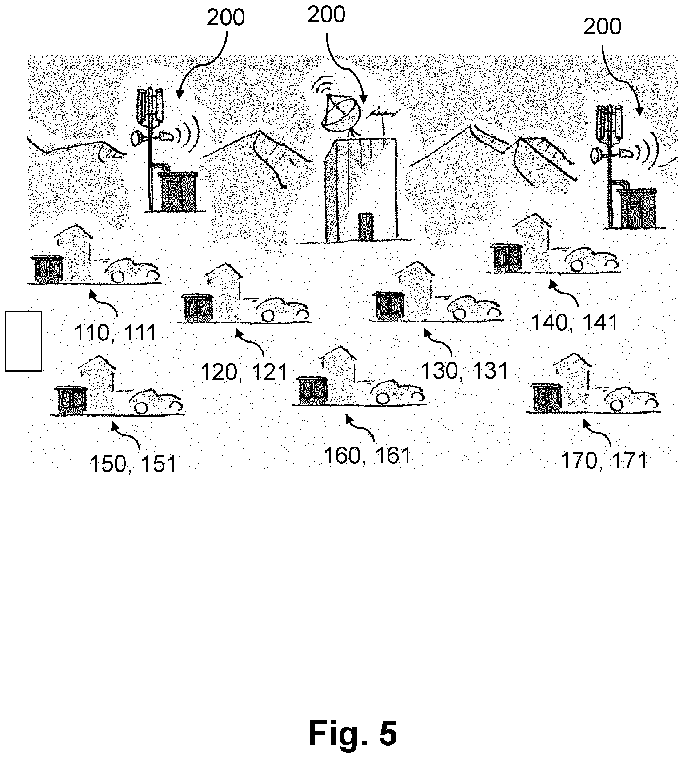

Figure 5 illustrates several entities which may interact to perform a method according to embodiments of the present invention, in particular several available operator persons 120, 130, 140, 150, 160, 170 who may overtake the workorder from the first operator person 110. Thus, in the course of requesting re-allocation, the access management server 300 provides a list of available operator persons 120, 130, 140, 150, 160, 170 to the first operator device 111, and the first operator person 110 selects, using the first operator device 111, the second operator person 120 to which the workorder should be re-allocated. It may be further provided that re-allocation is only performed, if the access management server 300 obtains consent from the second operator person 120 by communicating with the second operator device 121.

It may be provided that operator persons 110, 120, 130, 140, 150, 160, 170 are classified in classes, wherein workorders and/or access rights may require that an assigned operator person 110, 120, 130, 140, 150, 160, 170 is of a specific class, wherein re-allocation from the first operator person 110 to the second operator person 120 is only performed, if the second operator person 120 fulfills the requirement of class.

It may be provided that the workorder is categorized being re-allocatable by operator persons 110, 120, 130, 140, 150, 160, 170 or being non-re-allocatable by operator persons 110, 120, 130, 140, 150, 160, 170, wherein the workorder and the associated access right may only successfully be re-allocated by operator persons 110, 120, 130, 140, 150, 160, 170 if the workorder is of the re-allocatable category. Alternatively or additionally, it may be provided that the access right is categorized being re-allocatable by operator persons 110, 120, 130, 140, 150, 160, 170 or being non-re-allocatable by operator persons 110, 120, 130, 140, 150, 160, 170, wherein the workorder with the associated access right may only successfully be re-allocated by operator persons 110, 120, 130, 140, 150, 160, 170 if the access right is of the re-allocatable category.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 110: first operator person
- 120: second operator person
- 130, 140, 150, 160, 170: operator persons
- 111: first operator device
- 121: second operator device
- 131, 141, 151, 161, 171: operator devices
- 112, 122: electronic key
- 200: asset
- 300: access management platform

## Claims

1. A computer-implemented method for managing access to an asset (200) based on workorder-dependent access rights, the method being performed by an access management server (300), comprising:
defining an association between a workorder and an access right, wherein the workorder is to be performed at an asset (200), and wherein the access right grants access to the asset (200);
allocating the workorder and the associated access right to a first operator person (110) being assigned to perform the workorder;
sending the associated access right to a first operator device (111) of the first operator person (110);
receiving a re-allocation request from first operator device (111) requesting to re-allocate the workorder to a second operator person (120) to be assigned to perform the workorder instead of the first operator person (110);
performing re-allocation and sending the associated access right to a second operator device (121) of the second operator person (120).

2. A computer-implemented method for managing access to an asset (200) based on workorder-dependent access rights, the method being performed by a first operator device (111) of a first operator person (110), comprising:
receiving, from an access management server (300), an access right which is associated with a workorder, wherein the workorder and the associated access right are allocated to the first operator person (110), wherein the workorder is to be performed at an asset (200), and wherein the access right grants access to the asset (200);
sending a re-allocation request to the access management server (300) requesting to re-allocate the workorder to a second operator person (120) to be assigned to perform the workorder instead of the first operator person (110), the second operator person (120) having a second operator device (121);
receiving a positive notification if the re-allocation was successfully performed by the access management server (300) and/or a negative notification if the re-allocation was not successfully performed by the access management server (300).

3. The computer-implemented method of any one of the preceding claims, wherein in the course of requesting re-allocation, the access management server (300) provides a list of available operator persons (120, 130, 140, 150, 160, 170) to the first operator device (111), and the first operator person (110) selects, using the first operator device (111), the second operator person (120) to which the workorder should be re-allocated.

4. The computer-implemented method of any one of the preceding claims, wherein re-allocation is only performed, if the access management server (300) obtains consent from the second operator person (120) by communicating with the second operator device (121).

5. The computer-implemented method of any one of the preceding claims, wherein operator persons (110, 120, 130, 140, 150, 160, 170) are classified in classes, wherein workorders and/or access rights may require that an assigned operator person (110, 120, 130, 140, 150, 160, 170) is of a specific class, wherein re-allocation from the first operator person (110) to the second operator person (120) is only performed, if the second operator person (120) fulfills the requirement of class.

6. The computer-implemented method of any one of the preceding claims, wherein in the course of a re-allocation, the workorder is allocated to the second operator person (120) being assigned to perform the workorder, and the allocation of the workorder to the first operator person (110) is deleted, wherein the information about the re-allocation is stored in the access management server (300), preferably including a time stamp.

7. The computer-implemented method of any one of the preceding claims, wherein in the course of a re-allocation, the access right of the first operator device (111) is revoked, preferably by transmitting a revocation command from the access management server to the first operator device (111), wherein optionally re-allocation is only performed under the condition that the access right of the first operator device (111) is successfully revoked.

8. The computer-implemented method of any one of the preceding claims, wherein the workorder is categorized being re-allocatable by operator persons (110, 120, 130, 140, 150, 160, 170) or being non-re-allocatable by operator persons (110, 120, 130, 140, 150, 160, 170), wherein the workorder and the associated access right may only successfully be re-allocated by operator persons (110, 120, 130, 140, 150, 160, 170) if the workorder is of the re-allocatable category.

9. The computer-implemented method of any one of the preceding claims, wherein the access right is categorized being re-allocatable by operator persons (110, 120, 130, 140, 150, 160, 170) or being non-re-allocatable by operator persons (110, 120, 130, 140, 150, 160, 170), wherein the workorder with the associated access right may only successfully be re-allocated by operator persons (110, 120, 130, 140, 150, 160, 170) if the access right is of the re-allocatable category.

10. The computer-implemented method of any one of the preceding claims, wherein the communication between the operator devices (111, 121, 131, 141, 151, 161, 171) and the access management server (300) is performed using an online communication protocol.

11. The computer-implemented method of any one of the preceding claims, wherein for gaining access to a respective asset (200), the access right is transferred, preferably via a wireless communication technology, from a respective operator device (111, 121, 131, 141, 151, 161, 171) to an electronic key (112, 122), wherein the electronic key (112, 122) receives and stores the access right and is configured to communicate with an access control device that controls access to the asset (200).

12. An access management server (300) configured to at least partially perform a method according to one of the preceding claims.

13. An operator device (111, 121, 131, 141, 151, 161, 171), preferably being a mobile device, configured to communicate with the access management server (300) of claim 12, and configured to at least partially perform a method according to one of one of the preceding claims.

14. A system comprising an access management server (300) according to claim 12 and at least a first operator device (111) according to claim 13 and at least a second operator device (121) according to claim 13, wherein the system is configured to at least partially perform a method according to one of the preceding claims.

15. A computer program product comprising instructions which, when the program is executed by a computer, cause the computer to carry out a method of any one of claims 1 to 11.
